# EUROPÄISCHE PATENTANMELDUNG

(11) **EP 4 243 229 A1**
(43) Veröffentlichungstag der Anmeldung: **13.09.2023**
(21) Anmeldenummer: 22161431.6
(22) Anmeldetag: 10.03.2022
(51) Int. Cl.: H02G 15/103, H02G 15/107, H02G 15/184, H01B 17/58

(54) **HOCHSPANNUNGSVORRICHTUNG**

(71) Anmelder: Siemens Energy Global GmbH & Co. KG, 81739 München (DE)
(72) Erfinder: Schnitzler, Tim, 52372 Kreuzau (DE)

(57) **Zusammenfassung**

Die Erfindung betrifft eine Hochspannungsvorrichtung (10) mit einem Isolierkörper (12), einem Innenleiter (13), der durch den Isolierkörper entlang einer Längsrichtung der Vorrichtung hindurchgeführt ist, wobei der Isolierkörper ein kegelstumpfförmiges erstes axiales Ende (15) aufweist, der Isolierkörper ferner im Wesentlichen konzentrisch um den Innenleiter angeordnete, geeigneterweise durch Isolierlagen voneinander beabstandete, leitende Steuereinlagen (17, 18) zur Feldsteuerung umfasst. Die Erfindung zeichnet sich dadurch aus, dass eine radial äußere, geeigneterweise eine äußerste, Steuereinlage (17) sich axial über das Ende zumindest einer inneren, also bezüglich der äußeren Steuereinlage näher am Innenleiter angeordneten Steuereinlage (18) hinaus in Richtung des ersten Endes des Isolierkörpers erstreckt.

## Beschreibung

Die Erfindung betrifft eine Hochspannungsvorrichtung mit einem Isolierkörper sowie mit einem Innenleiter, der durch den Isolierkörper entlang einer Längsrichtung der Vorrichtung hindurchgeführt ist, wobei der Isolierkörper ein kegelstumpfförmiges erstes axiales Ende sowie im Wesentlichen konzentrisch um den Innenleiter angeordnete, geeigneterweise durch Isolierlagen voneinander beabstandete, leitende Steuereinlagen zur (kapazitiven) Feldsteuerung umfasst. Das kegelstumpfförmige erste axiale Ende des Isolierkörpers verjüngt sich demnach axial nach außen konusförmig und wird daher als Außenkonus bezeichnet. Als Hochspannungen im Sinne der Erfindung werden Spannungen oberhalb von 60kV verstanden, bezogen auf die elektrische Festigkeit bzw. Auslegung für den Betrieb der Vorrichtung. Die Steuereinlagen können beispielsweise als Folien aus Aluminium hergestellt sein.

Eine solche Hochspannungsdurchführung hat üblicherweise die Aufgabe, den im Betrieb der Hochspannungsdurchführung auf einem Hochspannungspotential liegenden Innenleiter von einer auf Erdpotential befindlichen Umgebung, beispielsweise einer Wandung einer Hochspannungsanlage oder einer Kesselwand eines Transformators, elektrisch zu isolieren. Des Weiteren werden Hochspannungsdurchführungen auch als Kabelendverschlüsse zur Verbindung eines Kabels mit einer Leitung, insbesondere einer Freileitung, eingesetzt. In diesem Fall ist der Isolierkörper üblicherweise dazu eingerichtet, an dessen erstem Ende mit einem Kabelstecker zusammenzuwirken. Insbesondere der Außenkonus des Isolierkörper geeigneterweise derart ausgestaltet, dass er in eine entsprechend geformte Ausnehmung des Kabelsteckers passgenau aufgenommen werden kann. Die Grenzfläche bzw. der Grenzbereich zwischen dem Außenkonus des Isolierkörpers und der Ausnehmung des Kabelsteckers ist bezüglich der dielektrischen Eigenschaften des Kabelendverschlusses besonders kritisch.

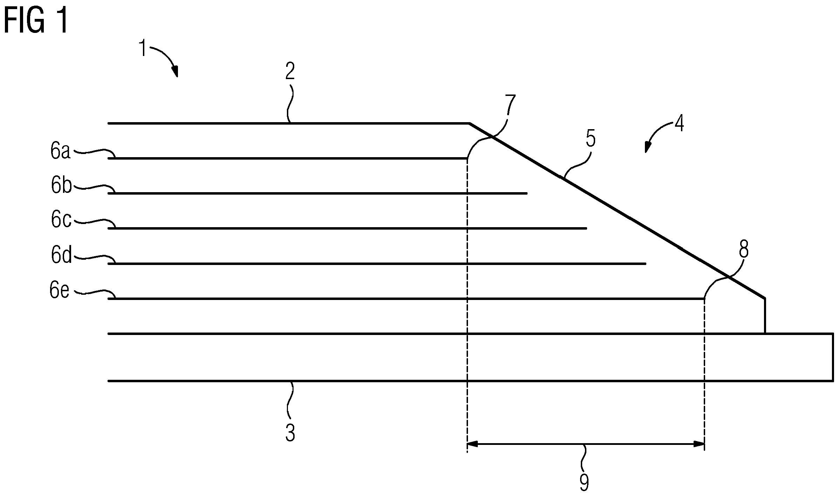

Figur 1 zeigt eine übliche artgemäße Hochspannungsvorrichtung 1 mit einem Isolierkörper 2, der einen Innenleiter 3 umgibt, und der an seinem ersten, einem Kabelstecker zugewandten Ende 4 einen Außenkonus 5 aufweist. Steuereinlagen 6a-6e erstrecken sich mit ihren axialen Enden in den Außenkonus 5 hinein und ermöglichen eine feine Feldsteuerung in diesem Bereich. Die axiale Strecke bzw. Entfernung zwischen dem axialen Ende 7 der kürzesten, hier: der äußersten Steuereinlage 6a, und dem axialen Ende 8 der längsten, hier: der innersten Steuereinlage 6e wird als axiale Steuerstrecke bezeichnet (in Figur 1 durch eine Linie 9 repräsentiert). Eine längere Steuerstrecke erlaubt im Allgemeinen eine effektivere Feldsteuerung.

Die Aufgabe der Erfindung ist es, eine artgemäße Hochspannungsvorrichtung vorzuschlagen, die möglichst zuverlässig ist.

Die Aufgabe wird bei einer artgemäßen Hochspannungsvorrichtung erfindungsgemäß dadurch gelöst, dass eine radial äußere, geeigneterweise eine äußerste, Steuereinlage sich axial über das Ende zumindest einer inneren (einer bezüglich der äußeren Steuereinlage näher am Innenleiter angeordneten Steuereinlage) hinaus in Richtung des ersten Endes des Isolierkörpers erstreckt. Durch eine solche Anordnung der Steuereinlagen ergibt sich insbesondere eine sogenannte Rücksteuerung des elektrischen Feldes im Isolierkörper. Die technischen Vorteile dieser Rücksteuerung werden im Folgenden erläutert.

Die erfindungsgemäße Hochspannungsvorrichtung hat die Grundfunktion einer kapazitiv gesteuerten Hochspannungsdurchführungen. Sie erreicht durch ihre feine axiale und radiale Steuerung des elektrischen Feldes eine sehr gleichmäßige und niedrige Belastung der umgebenden Isoliermedien (z.B. Freiluft, Öl, Gas, Feststoff) unter Einhaltung kompakter Gesamtabmessungen. Es gibt jedoch Anwendungsfälle zum Einsatz von kapazitiv gesteuerten Durchführungen, die eine besonders kurze Ausführung des ersten Endes des Isolierkörpers (des Außenkonus) voraussetzen. Dies kann z.B. eine Hochspannungsvorrichtung zum Abschluss eines Hochspannungskabels sein, also ein Kabelendverschluss, der den Übergang zwischen Kabel und Freileitung bildet. Der im Betrieb des Kabelendverschlusses an den Außenkonus des Isolierkörper angeschlossene Kabelstecker ist häufig in axialer Richtung sehr kurz ausgeführt, was insbesondere bedeutet, dass die Ausnehmung zur Aufnahme des Isolierkörpers in axialer Richtung entsprechend kurz ist. Da der Außenkonus des Isolierkörpers formkomplementär zu der Ausnehmung im Kabelstecker sein muss, muss der Außenkonus in diesem Fall ebenfalls in axialer Richtung entsprechend kurz ausgeführt sein. Dies wiederum hat zur Folge, dass eine effektive, feine Feldsteuerung innerhalb des Außenkonus nicht ausgeführt werden kann (die dazu benötigte axiale Steuerstrecke ist im Bereich des kurzen Außenkonus dazu nicht ausreichend). Bei der erfindungsgemäßen Hochspannungsvorrichtung werden diese Nachteile durch die Rücksteuerung behoben. Insbesondere erlaubt die Rücksteuerung am ersten Ende des Isolierkörpers eine für die jeweilige Anwendung vorteilhaft lange / ausreichende axiale Steuerstrecke, auch bei einer kurzen Ausführung des Außenkonus des Isolierkörpers. Auf diese Weise kann eine hohe Zuverlässigkeit der Hochspannungsvorrichtung auch bei verkürztem Außenkonus erreicht werden. Zugleich ergeben sich weitere Vorteile durch die Möglichkeit einer besonders kompakten Bauweise der Hochspannungsvorrichtung.

Zweckmäßigerweise bildet eine (gedachte) Verbindungsfläche der axialen, in Richtung des ersten Endes weisenden Enden derjenigen Steuereinlagen, die radial zwischen der äußeren und der inneren Steuereinlage angeordnet sind, einen sich zum ersten Ende öffnenden Konusmantel. Die Verbindungsfläche kann auch als Innenkonus bezeichnet werden. Demnach weist der Isolierkörper einen Außenkonus auf, wohingegen die räumliche Anordnung der Steuereinlagen im Inneren des Isolierkörpers einen Innenkonus bildet. Radial zwischen der äußeren und der inneren Steuereinlage können sich viele weitere Steuereinlagen befinden, so dass eine besonders feine Feldsteuerung ermöglicht ist. Die Geometrie des Außenkonus bestimmt die dielektrischen Eigenschaften an der Verbindungsstelle selbst, bsp. zum Kabelstecker; die Geometrie des Innenkonus bestimmt die Feldsteuerung am ersten Ende des Isolierkörpers und insbesondere an der Verbindungsstelle.

Zur Beschreibung der geometrischen Anordnung können ein erster und ein zweiter Winkel herangezogen werden. Der erste Winkel (alpha1) ist ein Winkel zwischen einem ersten Vektor, der nach außen entlang der Verbindungsfläche weist, und einem zweiten Vektor, der entlang einer Längsrichtung des Innenleiter in Richtung auf das erste Ende des Isolierkörpers weist, gegeben ist. Der zweite Winkel (alpha2) ist ein Winkel zwischen dem zweiten Vektor und einem dritten Vektor, der nach innen entlang des kegelstumpfförmigen ersten Endes des Isolierkörpers weist. Zweckmäßigerweise ist der erste Winkel (alpha1) kleiner als der zweite Winkel (alpha2). Bei dieser Geometrie der Hochspannungsvorrichtung ist die zur Verfügung stehende axiale Steuerstrecke größer als diejenige, die durch die Geometrie des Außenkonus des Isolierkörpers vorgegeben ist (höchstens möglich wäre).

Vorzugsweise ist die äußerste Steuereinlage mit einem Erdpotenzial verbunden. Die Anbindung an das Erdpotenzial kann beispielsweise mittels einer Verbindung der äußersten Steuereinlage mit einem Befestigungsflansch der Hochspannungsvorrichtung hergestellt sein. Auf diese Weise wird erreicht, dass die äußerste Steuereinlage im Betrieb der Hochspannungsvorrichtung auf einem wohldefinierten Potenzial liegt.

Bevorzugt ist die innere Steuereinlage eine radial zweitinnerste Steuereinlage. Somit kann die Rücksteuerung über fast alle Steuereinlagen erfolgen, was eine besonders feine Feldsteuerung erlaubt.

Zweckmäßigerweise ist eine radial innerste Steuereinlage mit dem Innenleiter elektrisch verbunden. Damit wird erreicht, dass die innerste Steuereinlage im Betrieb der Hochspannungsvorrichtung auf einem wohldefinierten Potenzial (dem Potenzial des Innenleiters) liegt.

Die innerste Steuereinlage erstreckt sich bevorzugt über ein zum ersten Ende des Isolierkörpers weisendes Ende der zweitinnersten Steuereinlage hinaus (in Richtung des ersten Endes des Isolierkörpers). Es ist vorteilhaft, die innerste Steuereinlage axial möglichst lang auszuführen, um einen definierten Spannungsübergang von der Hochspannung des Innenleiters in den Isolierkörper herzustellen.

Es wird als vorteilhaft angesehen, wenn ein Abstand A (im Sinne einer kürzesten Verbindung) zwischen einem axialen Ende der äußersten Steuereinlage und einer Außenfläche des kegelstumpfförmigen ersten Endes des Isolierkörpers kleiner als 1cm ist. Wie bereits erwähnt ist die Grenzfläche zwischen dem Außenkonus des Isolierkörpers und einem daran anschließenden Kabelstecker besonders kritisch bezüglich der dielektrischen Eigenschaften. Diese Eigenschaften können verbessert werden, wenn die Feldsteuerung auch möglichst nah an dieser Grenzfläche erfolgt.

Bevorzugt umfasst der Isolierkörper ausgehärtetes Harz. Gemäß einer Ausführungsform der Erfindung umfasst der Isolierkörper harzimprägnierte Isolierlagen. Ein solcher Isolierkörper ist nach der Imprägnierung mit dem Harz (bspw. einem Epoxidharz) formfest und bildet einen relativ harten Block. Die Isolierlagen können Papier oder Vlies umfassen und konzentrisch oder spiralförmig um den Innenleiter unter Ausbildung eines Wickelkörpers gewickelt sein. Auf diese Weise kann die Herstellung der Hochspannungsdurchführung besonders einfach und kostengünstig erfolgen. Darüber hinaus kann eine besonders gleichmäßige Anordnung der Isolierlagen im Isolierkörper gewährleistet werden. Die derart ausgestaltete Hochspannungsvorrichtung ist besonders wartungsarm.

Die Hochspannungsvorrichtung findet eine besonders geeignete Anwendung bei einem Kabelendverschluss, wobei die Hochspannungsvorrichtung an einem Freiluftende mit einem elektrischen Leiter, insbesondere einem Leiter einer Freileitung, und an einem Kabelende mit einem Kabelanschluss verbunden wird, wobei das erste Ende des Isolierkörpers am Kabelende angeordnet ist. Der Kabelanschluss ist bevorzugt als ein Kabelstecker ausgeführt, der eine Ausnehmung aufweist, die zum Außenkonus des Isolierkörpers formkomplementär ist. Die Vorteile der Hochspannungsdurchführung ergeben sich hier insbesondere durch die zuvor beschriebenen Maßnahmen in Bezug auf die feldtechnische Auslegung und eine Abstimmung des Feldlinienverlaufs insbesondere im Bereich des Übergangs vom Isolierkörper zu dem Kabelstecker. Die feine kapazitive Steuerung muss in axialer Richtung auf der Freiluftseite der Durchführung und in radialer Richtung zum geerdeten Flansch beibehalten werden, um die kompakten Abmessungen zu erhalten und gleichzeitig die Isoliermedien nicht zu überlasten. Die dazu verwendeten leitfähigen Steuereinlagen benötigen einen Mindestabstand ihrer umfänglichen Einlagenränder zueinander. Auf der Freiluftseite ist dies ohne weiteres möglich. Auf der Kabelseite ist dieser Abstand durch die Länge des Kabelsteckers und der darin enthaltenen Steuerelektroden begrenzt. Um nun bei einer Durchführung mit kurzem Außenkonus auf der Kabelseite den Platz für den benötigten Abstand der Einlagenränder zu erhalten, werden die Einlagenenden auf dieser Seite rückgesteuert. Die Rücksteuerung kann jetzt so weit in die Durchführung hineingezogen werden, wie es für die Erreichung einer möglichst optimaler Feldsteuerung notwendig ist. Es ergibt sich nun außerdem schon in der Hochspannungsvorrichtung ein Übergang von der gleichmäßigen Feldsteuerung durch die kapazitiven Steuereinlagen zu einer allein vom Kehrwert des Radius abhängigen geometrischen Feldsteuerung im Kabel.

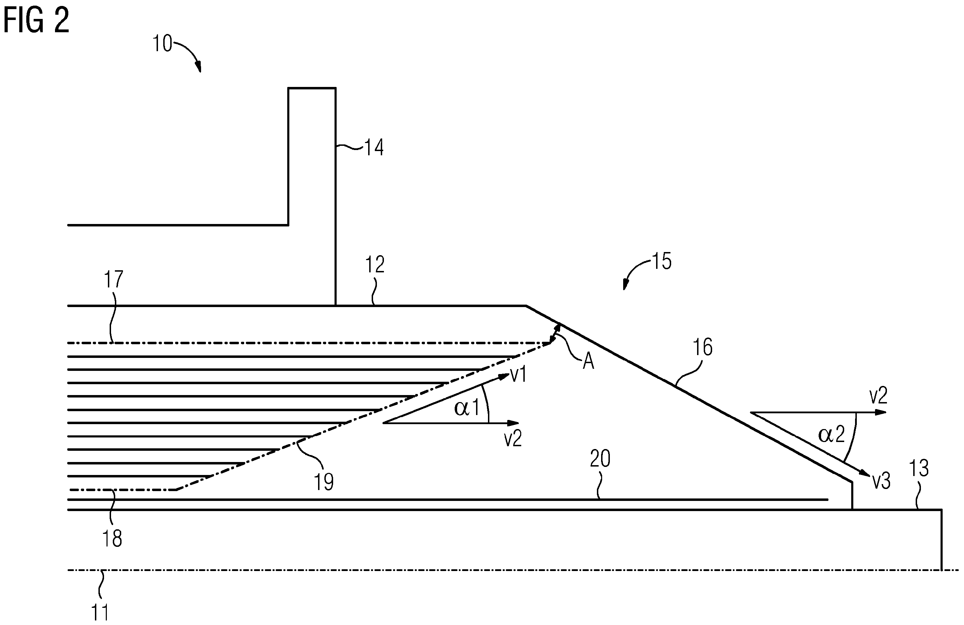

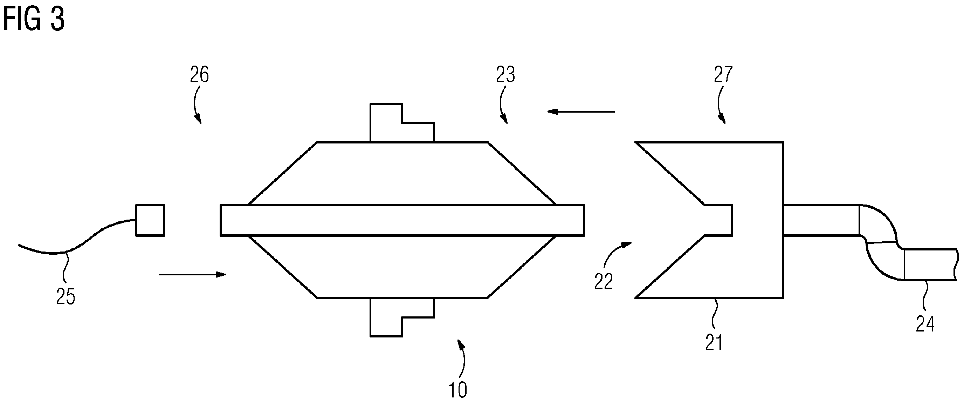

Die Erfindung wird im Folgenden anhand eines in den Figuren 2 und 3 dargestellten Ausführungsbeispiels weiter erläutert.
Figur 2 zeigt ein Ausführungsbeispiel einer erfindungsgemäßen Hochspannungsvorrichtung in einer schematischen Darstellung;
Figur 3 zeigt die Hochspannungsvorrichtung der Figur 2 in einer Anwendung in einem Kabelendverschluss in einer schematischen Darstellung.

In Figur 2 ist eine Hochspannungsvorrichtung 10 gezeigt. Die Hochspannungsvorrichtung 10 ist rotationssymmetrisch um eine Mittelachse 11 aufgebaut, wobei die Mittelachse 11 eine Längsachse bzw. eine axiale Richtung der Hochspannungsvorrichtung 10 festlegt. Die Hochspannungsvorrichtung 10 umfasst einen Isolierkörper 12. Durch den Isolierkörper 12 ist ein Innenleiter 13 hindurchgeführt ist. Die Hochspannungsvorrichtung 10 umfasst ferner einen Befestigungsflansch 14 zur Befestigung der Hochspannungsvorrichtung 10 geeigneterweise an einem Kabelanschluss.

Der Isolierkörper 12 weist ein erstes, einem Kabelstecker zugewandtes, axiales Ende 15 auf. Das kegelstumpfförmige erste axiale Ende des Isolierkörpers verjüngt sich axial nach außen konusförmig und bildet einen Außenkonus 16.

Der Isolierkörper 12 weist ferner in dessen Inneren einen Steuerbereich auf, in dem Steuereinlagen konzentrisch (oder nahezu konzentrisch) angeordnet und durch Isolierlagen voneinander getrennt sind. Der Steuerbereich ist radial nach außen durch eine äußerste Steuereinlage 17, radial nach innen durch eine zweitinnerste Steuereinlage 18 und axial zum ersten Ende 15 hin durch eine gedachte Verbindungsfläche 19, die axiale Enden der zwischen der äußersten und der zweitinnersten Steuereinlage angeordneten weiteren Steuereinlagen miteinander verbindet, begrenzt. Die Verbindungsfläche 19 öffnet sich zum ersten Ende 15 hin und bildet einen Innenkonus. Eine innerste Steuereinlage 20 ist elektrisch mit dem Innenleiter 13 verbunden. Als A ist ein Abstand zwischen dem axialen Ende der äußersten Steuereinlage 17 und einer Oberfläche des Außenkonus 16 bezeichnet.

Zur Veranschaulichung der Geometrie der Hochspannungsvorrichtung 10 werden folgende Vektoren definiert:
ein erster Vektor v1, der nach außen entlang der Verbindungsfläche 19 weist,
ein zweiter Vektor v2, der entlang einer Längsrichtung des Innenleiters 13 in Richtung auf das erste Ende 15 des Isolierkörpers 12 weist, und
ein dritter Vektor v3, der nach innen entlang des Außenkonus 16 des Isolierkörpers 12 weist.

In dem in Figur 2 gezeigten Ausführungsbeispiel ist ein erster Winkel alphal zwischen v1 und v2 kleiner als ein zweiter Winkel alpha2 zwischen v2 und v3. Damit ist die axiale Steuerstrecke im gezeigten Ausführungsbeispiel ausreichend, um eine feine Feldsteuerung der Hochspannungsvorrichtung 10 zu ermöglichen.

Figur 3 zeigt die Hochspannungsvorrichtung 10 der Figur 3, einen Kabelanschluss 27 mit einem Kabelstecker 21 mit einer konusförmigen Ausnehmung 22 zum Verbinden der Hochspannungsvorrichtung 10 an deren Kabelende 23 mit einem Kabel 24 sowie einer Freileitung 25, die im Betrieb mit der Hochspannungsvorrichtung 10 an deren Freiluftende 26 verbunden ist.

## Patentansprüche

1. Hochspannungsvorrichtung (10) mit
- einem Isolierkörper (12),
- einem Innenleiter (13), der durch den Isolierkörper (12) hindurchgeführt ist, wobei
der Isolierkörper (12) ein kegelstumpfförmiges erstes axiales Ende (15) aufweist,
der Isolierkörper (12) ferner konzentrisch um den Innenleiter (13) angeordnete Steuereinlagen (17, 18) zur Feldsteuerung umfasst
**dadurch gekennzeichnet, dass** eine äußere Steuereinlage (17) sich axial über ein Ende zumindest einer inneren Steuereinlage (18) hinaus in Richtung des ersten Endes (15) des Isolierkörpers (12) erstreckt.

2. Hochspannungsvorrichtung (10) nach Anspruch 1, wobei eine Verbindungsfläche (19) der axialen, in Richtung des ersten Endes (15) weisenden Enden derjenigen Steuereinlagen, die radial zwischen der äußeren und der inneren Steuereinlage (17, 18) angeordnet sind, einen sich zum ersten Ende (15) öffnenden Konusmantel bildet.

3. Hochspannungsvorrichtung (10) nach Anspruch 2, wobei
- ein erster Winkel (alpha1) zwischen einem ersten Vektor (v1), der nach außen entlang der Verbindungsfläche weist und
einem zweiten Vektor (v2), der entlang einer Längsrichtung (11) des Innenleiters (13) in Richtung auf das erste Ende (15) des Isolierkörpers (12) weist, gegeben ist, und
- ein zweiter Winkel (alpha2) zwischen dem zweiten Vektor (v2) und
einem dritten Vektor (v3), der nach innen entlang des kegelstumpfförmigen ersten Endes des Isolierkörpers (12) weist gegeben ist, wobei der erste Winkel (alpha1) kleiner als der zweite Winkel (alpha2) ist.

4. Hochspannungsvorrichtung (10) nach einem der vorangehenden Ansprüche, wobei die äußerste Steuereinlage (17) mit einem Erdpotenzial verbunden ist.

5. Hochspannungsvorrichtung (10) nach einem der vorangehenden Ansprüche, wobei die innere Steuereinlage (18) eine zweitinnerste Steuereinlage ist.

6. Hochspannungsvorrichtung (10) nach einem der vorangehenden Ansprüche, wobei eine innerste Steuereinlage (20) mit dem Innenleiter (13) elektrisch verbunden ist.

7. Hochspannungsvorrichtung (10) nach Anspruch 5, wobei die innerste Steuereinlage (20) sich über ein zum ersten Ende des Isolierkörpers (12) weisendes Ende der zweitinnersten Steuereinlage (18) hinaus erstreckt.

8. Hochspannungsvorrichtung (10) nach einem der vorangehenden Ansprüche, wobei ein Abstand A zwischen einem axialen Ende einer äußersten Steuereinlage (17) und einer Außenfläche des kegelstumpfförmigen ersten Endes (15) des Isolierkörpers (12) kleiner als 1cm ist.

9. Hochspannungsvorrichtung (10) nach einem der vorangehenden Ansprüche, wobei der Isolierkörper (12) ausgehärtetes Harz umfasst.

10. Anwendung einer Hochspannungsvorrichtung (10) nach einem der Ansprüche 1 bis 9 bei einem Kabelendverschluss, wobei die Hochspannungsvorrichtung (10) an einem Freiluftende (26) mit einem elektrischen Leiter, insbesondere einem Leiter einer Freileitung, und an einem Kabelende (23) mit einem Kabelanschluss verbunden wird, wobei das erste Ende (15) des Isolierkörpers (12) am Kabelende (23) angeordnet ist.
